# EUROPEAN PATENT SPECIFICATION

(11) **EP 3 928 594 B1**
(45) Date of publication and mention of the grant of the patent: **10.04.2024**
(21) Application number: 20704058.5
(22) Date of filing: 17.02.2020
(51) Int. Cl.: H05B 47/175, H05B 47/19

(54) **ENHANCING A USER'S RECOGNITION OF A LIGHT SCENE**
VERBESSERUNG DER ERKENNUNG EINER LICHTSZENE DURCH EINEN BENUTZER
AMÉLIORATION DE LA RECONNAISSANCE D'UN UTILISATEUR D'UNE SCÈNE LUMINEUSE

(30) Priority: 19.02.2019 EP 19157903
(43) Date of publication of application: 29.12.2021
(73) Proprietor: Signify Holding B.V., 5656 AE Eindhoven (NL)
(72) Inventor: ALIAKSEYEU, Dzmitry, Viktorovich, 5656 AE Eindhoven (NL); DE SAMBER, Marc, Andre, 5656 AE Eindhoven (NL)
(74) Representative: Verweij, Petronella Daniëlle
(86) International application number: PCT/EP2020/054075
(87) International publication number: WO 2020/169520

(56) References cited:
- WO-A1-2018/037009
- WO-A1-2018/099799
- US-A1- 2017 265 279
- US-A1- 2018 098 408

## Description

### FIELD OF THE INVENTION

The invention relates to a method for enhancing a user's recognition of a light scene. The invention further relates to a system for enhancing a user's recognition of a light scene.

### BACKGROUND

A burgeoning market currently increasing in scope is that being built around smart devices and home networks. Systems being formed from such elements typically fall under the heading of smart home systems. Smart home systems are often connected to the Internet, typically such that they may be controlled by a user when (s)he is out-of-home. Although referred to above as a 'home' system, such a system can be implemented in any environment such as a work space or outdoor space, such that the system comprises, and may be used to control, devices placed within the environment. The connected devices are any devices capable of being connected to, or identified by, the system. A commonly used phrase for such a system and its devices is the Internet of Things (IoT) and IoT devices. In the Internet of Things (IoT) many kinds of devices are connected to the Internet, allowing elements of an environment such as heating and lighting to be controlled using dedicated devices which are networked together into the 'home' system.

An important ingredient of smart home systems is a connected lighting system, which refers to a system of one or more lighting devices. These lighting devices are controlled not by (or not only by) a traditional wired, electrical on-off or dimmer circuit, but rather by using a data communications protocol via a wired or more often wireless connection, e.g. a wired or wireless network. Typically, the lighting devices, or even individual lamps within a lighting device, may each be equipped with a wireless receiver or transceiver for receiving lighting control commands from a lighting control device according to a wireless networking protocol such as Zigbee, Wi-Fi or Bluetooth.

The lighting devices, e.g. in the connected lighting system, can be used to render a light scene. The light scene comprises different light effects and can be used to enhance, e.g. entertainment experiences such as audio-visual media, set an ambience and/or a mood of a user.

US 2018/098408 A1 discloses controlling one or more luminaires associated with an entertainment device to render an entertainment effect, and receiving a lighting instruction identifying the luminaires and a lighting effect. A determination is made that a first luminaire is one of the luminaires currently rendering the entertainment effect. A second luminaire is controlled to render the lighting effect while the first luminaire continues to render the entertainment effect.

### SUMMARY OF THE INVENTION

The inventors have realized that with enough lighting devices (light points), connected lighting system can offer limitless possibilities in changing the ambiance or setting a mood. Naturally, people often have dozens of light scenes for different areas in their home in addition to standard light scenes already offered by the system, e.g. by Philips Hue. However, when the number of lighting devices (light points) is limited, it is difficult to create a recognizable and evocative light scene. For example, the "enchanted forest" light scene in the Philips Hue Go dynamically changes light in the green spectrum, however even when knowing the name of a scene many would not recognize it and will not associate it with the forest.

It is therefore an object of the present invention to provide a method for controlling an audio fragment rendering device according to the appended claim 1, a controller for controlling an audio fragment rendering device according to claim 14, and a computer program product according to the appended claim 15. Further features of the method of claim 1 are disclosed in dependent claims 2-13.

According to a first aspect, the object is achieved by a method for controlling an audio fragment rendering device according to the appended claim 1.

The method comprises the step of receiving a first signal indicative of the section of a light scene. The selection can be performed manually, e.g. by a user, or automatically, e.g. by a controller. The method further comprises the step of determining whether the light scene is selected descriptively or non-descriptively. The descriptively selected light scene may comprise selecting the light scene via a user interface device which provides a descriptive name of the light scene. For example, the user interface device may be a mobile phone, tablet or a computer, and the descriptive name is a representation of the light scene; wherein the representation may comprise a text, a figure, or an image. The determination may be made based on a characteristic of the first signal, e.g. based on the source of the first signal, type of the first signal etc. The one or more lighting devices may be controlled to render the light scene.

The method further comprises, on the condition that the determination has been made that the light scene has been non-descriptively selected, the step of determining a characteristic of the light scene. In an embodiment, the determined characteristics of the light scene may comprise one or more of: an image associated with the light scene, title, color, color temperature, intensity, beam width, beam direction, illumination intensity. For example, the color of the light scene may be the average color or the dominant color of the light scene. The color of the light scene may be a color palette, for instance, color rendered by each or some of lighting devices. Different weighting may be used to form such a color palette. The method further comprises providing an audio fragment based on the determined characteristic, and controlling an audio fragment rendering device to render the provided audio fragment. The audio fragment may be provided such that it matches with the light scene. For example, if the "enchanted forest" light scene in the Philips Hue Go is selected, based on condition that the light scene has been non-descriptively selected, the audio fragment, for instance, an audio of a bird, animal or wind blowing in a forest etc. which best matches with the forest scene, may be provided, The audio fragment is then rendered, which enhances the recognition of the light scene. Therefore, a user's recognition of a light scene is enhanced, irrespective of the number and/or the type of the lighting devices used to render the light scene.

In an embodiment, the non-descriptively selected light scene may comprise the selection of the light scene via one of: a voice command, a switch, a non-descriptive icon on a user interface device, a rule-based selection, a time-based selection, a sensor-based selection.

The light scene may be non-descriptively selected. For instance, via a voice command, e.g. by using smart speakers. The non-descriptively selected light scene may also comprise selection via a switch, e.g. the legacy wall switch, dimmer etc., or via a non-descriptive icon on a user interface device, such as an icon on a mobile phone, tablet or computer. The non-descriptive selection may further comprise a rule-based, a time-based and/or a sensor-based selection, for instance, the light scene associated with wake-up, sleep or a presence of a user.

In an embodiment, the method may further comprise: receiving a second signal indicative of a subsequent selection of the light scene; wherein a subsequent rendering of the audio fragment is limited to a predetermined number of times. In this embodiment, the method may comprise: receiving a second signal indicative of a subsequent selection of the light scene; controlling the audio fragment rendering device to render the provided audio fragment for a predetermined number of times.

When the light scene is subsequently selected, e.g. selected at a different time or at a different day, the audio fragment may be subsequently rendered as well; wherein the number of subsequent renderings of the audio fragment may be limited to a predetermined number of times. For instance, a user may or may not prefer to subsequently render the audio fragment with the subsequently selected light scene, e.g., after (s)he starts recognizing the light scene.

In an embodiment, the predetermined number of times of the subsequent rendering of the audio fragment may be different for a descriptively selected light scene and for a non-descriptively light scene.

A user may like to subsequently render audio fragment, when (s)he selects the light scene in a non-descriptive way compared to when (s)he selects the light scene in a descriptive way. For instance, the recognition of a light scene selected via a switch requires rendering the audio fragment comparatively higher number of times than when the light scene is selected via a mobile phone with a descriptive name.

In an embodiment, the subsequent rendering of the audio fragment may comprise rendering an amended audio fragment or rendering a different audio fragment, wherein the amended audio fragment may comprise changing one or more of: time duration, beat, timbre, pitch, intensity, rhythm, major and minor key.

For instance, when a user does not prefer the provided audio fragment, (s)he may like to amend the audio fragment, for example, according to his/her preference such that the recognition of the light scene is enhanced. Alternative to amending the audio fragment, the user may prefer to render a different audio fragment, e.g. which better matches his/her expectation, and/or which improves the recognition of the light scene.

In an embodiment, the step of providing an audio fragment based on the determined characteristic may comprise: obtaining a plurality of audio fragments, selecting the audio fragment from the plurality of audio fragments based on the determined characteristic, associating the audio fragment with the light scene.

The step of providing may comprise obtaining a plurality of audio fragments, e.g. from a music streaming or video sharing platform. The audio fragment may be selected from the plurality based, e.g. on a similarity criterion, with the determined characteristic. The audio fragment may be then associated with the light scene.

In an embodiment, when a subset of audio fragments from the plurality of audio fragments has been selected, the step of selecting the audio fragment from the subset may be based on one or more of: a user preference, a spatial location, type and/or number of the audio fragment rendering device(s), a psychological or physiological state of a user, a previous audio fragment used by a user, the time of day, an environmental context.

In case when a subset of audio fragments is selected, wherein the subset has more than one audio fragment, the selection of the audio fragment from the subset may be based on a user preference or on a psychological or physiological state of a user. The spatial location, type and/or number of the audio fragment rendering device(s) may be considered such that the audio fragment is rendered, e.g. according to the user expectation.

In an embodiment, the step of providing an audio fragment based on the determined characteristic may comprise: generating the audio fragment based on the determined characteristic, associating the audio fragment with the light scene.

An alternative to selecting the audio fragment from the plurality of audio fragments may be to generate the audio fragment based on the determined characteristics. The generation may be based on a machine learning approach, such as similarity analysis.

In an embodiment, the method may further comprise: providing a picture and/or a video based on the determined characteristic and controlling a video rendering device to render the provided picture and/or video.

In an embodiment, the method may further comprise: providing an aroma based on the determined characteristic and controlling an olfactory rendering device to render the provided picture and/or video.

The picture and/or video or aroma respectively may complement the audio fragment such that the picture and/or video or aroma respectively may be rendered in at least partially parallel to the audio fragment or alternatively, may be rendered sequentially with the audio fragment.

According to a second aspect, the object is achieved by a controller for controlling an audio fragment rendering device to render an audio fragment for enhancing recognition of a light scene according to claim 14.

According to a third aspect, the object is achieved by a computer program product, according to the appended claim 15, comprising instructions configured to execute the steps of the method of any of claims 1-13, when executed on a controller according to claim 14.

### BRIEF DESCRIPTION OF THE DRAWINGS

The above, as well as additional objects, features and advantages of the disclosed systems, devices and methods will be better understood through the following illustrative and non-limiting detailed description of embodiments of systems, devices and methods, with reference to the appended drawings, in which:
Fig. 1 shows schematically and exemplary an embodiment of a system for enhancing a user's recognition of a light scene,
Fig. 2 shows schematically and exemplary a user interface device for selecting a light scene,
Fig. 3 shows schematically and exemplary a flowchart illustrating an embodiment of a method for enhancing a user's recognition of a light scene,
Fig. 4 shows schematically and exemplary a flowchart illustrating an embodiment of another method for enhancing a user's recognition of a light scene,
Fig. 5 shows schematically and exemplary a flowchart illustrating an embodiment of another method for enhancing a user's recognition of a light scene,
Fig. 6 shows schematically and exemplary a controller for enhancing a user's recognition of a light scene.

All the figures are schematic, not necessarily to scale, and generally only show parts which are necessary in order to elucidate the invention, wherein other parts may be omitted or merely suggested.

### DETAILED DESCRIPTION OF EMBODIMENTS

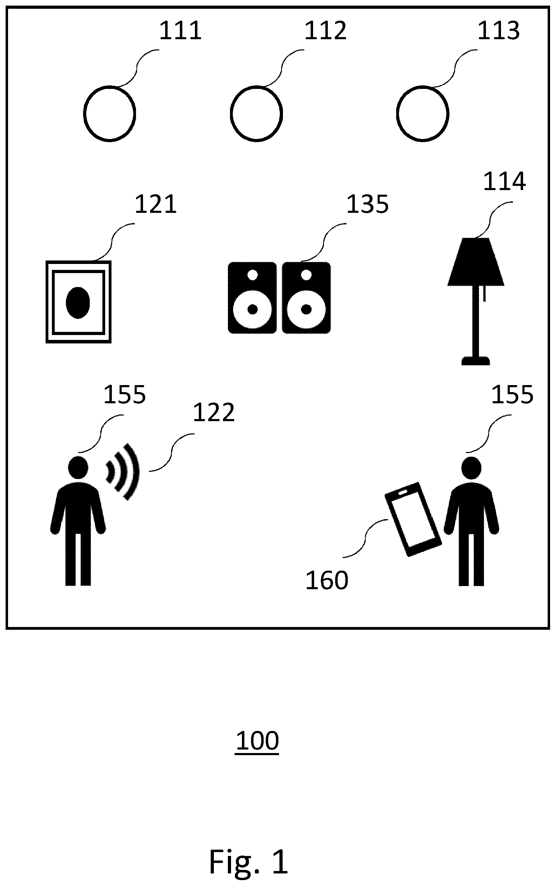

Fig. 1 shows schematically and exemplary an embodiment of a system 100 for enhancing a user's recognition of a light scene. The system 100 comprises four lighting devices 111-114. A lighting device is a device or structure arranged to emit light suitable for illuminating an environment, providing or substantially contributing to the illumination on a scale adequate for that purpose. A lighting device comprises at least one light source or lamp, such as an LED-based lamp, gas-discharge lamp or filament bulb, etc., optionally any associated support, casing or other such housing. Each of the lighting device may take any of a variety of forms, e.g. a ceiling mounted luminaire, a wall-mounted luminaire, a wall washer, or a free-standing luminaire (and the luminaires need not necessarily all be of the same type). For example, the lighting device 114, as shown in Fig. 1, is a standing lamp. The lighting devices 111-114 are arranged for rendering a light scene. The system 100 may comprise different forms of lighting devices 111-114 and may comprise different number of lighting devices 111-114.

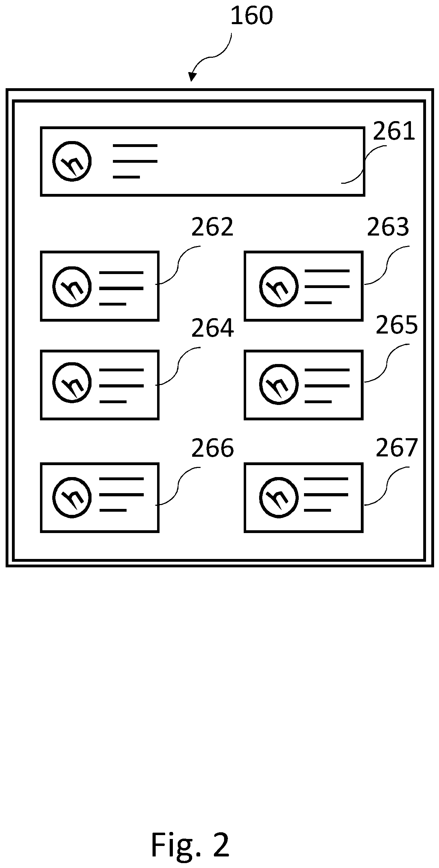

The system 100 comprises various ways to select a light scene either in a descriptive way or a non-descriptive way. The descriptively selected light scene may comprise selecting the light scene via the user interface device 160 which provides a descriptive name of the light scene. The descriptive name is a representation of the light scene; wherein the representation may comprise a text, figure, or image. For example, a user 155 may select the light scene via a user interface device 160, which in this exemplary figure is shown to be a mobile phone 160. Such a user interface device 160 is also exemplarily shown in Fig. 2. The user interface device 160 may be a tablet, a computer or any type of user interface device 160 which may provide a descriptive name of the light scene(s).

Alternatively, the light scene may be non-descriptively selected. For instance, the user 155 may select the light scene via a voice command 122, e.g. a smart speaker, or by using a switch 121. In Fig. 1, the switch 121 is exemplary shown to be a legacy wall-switch 121. The selection of the light scene may be time-based, for instance, a user 155 may set a Go-to-sleep (Good night) scene in the night, or a Wake-up (sun-rise) scene early in the morning. The selection may be rule-based and/or sensor-based, for instance, a coming home scene which is rendered on a user 155 arrival, a concentrate or relax scene based on the context of an environment of a user 155, a physiological and psychological state of a user 155 and/or activity of a user 155 which are e.g. measured by the sensor (not shown). The non-descriptive selection may comprise all other cases, other than e.g. shown in the Fig. 1 and known to the person skilled in the art, wherein a user interface device does not provide a descriptive name of the light scene. The light scene, in both descriptive or non-descriptive selection, may also be selected automatically by a controller (not shown in Fig. 1).

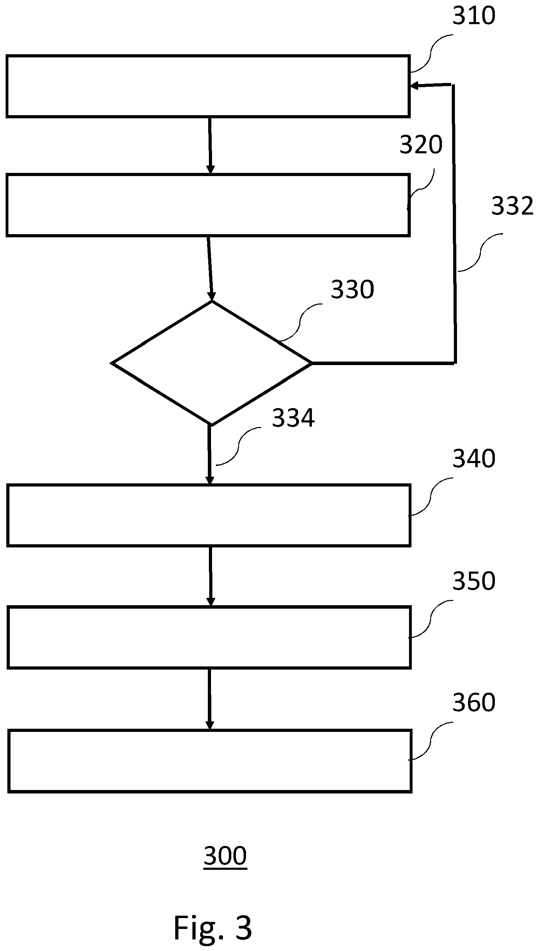

The system 100 may comprise an audio fragment rendering device 135 to render an audio fragment. In this exemplary figure, the audio fragment rendering device is an external speaker 135. Any other audio fragment rendering device, e.g. headsets, head phone, ear phones etc. may also be used to render the audio fragment. The system 100 may comprise more than one audio fragment rendering device 135. The audio fragment rendering device 135 may be co-located with the lighting devices 111-114, e.g. in the same room, or may be located at different but neighboring locations, e.g. the lighting devices 111-114 are located in the bed room of a house and the audio fragment rendering device 135 is located in the living room. Based on the determination that the light scene is non-descriptively selected, a characteristic of the light scene may be determined, wherein the determined characteristics of the light scene may comprise one or more of: an image associated with the light scene, title of the light scene, color, color temperature, intensity, beam width, beam direction, illumination intensity. The color of the light scene may comprise the average color of the light scene or the dominant color. The color of the light scene may be according to a user preference. The color may be a single color or a vector of colors, e.g. a color palette. The color palette may comprise the colors rendered by each of some of the lighting devices. The color palette may comprise a weighted combination of colors rendered by the lighting devices. The weights may be assigned based on a user preference and/or automatically by a learning algorithm. Similarly, the intensity and the other characteristics of the light scene may be a single value or a vector of values. For example, intensity may be an average intensity or highest/lowest intensity or a vector of intensities. The image associated with the light scene may be the image which is used to generate the palette for the light scene, for instance image in the Philips Hue app. Similar interpretation may be given to other characteristics of the light scene. An audio fragment may be provided based on the determined characteristic. In a simple example, a user 155 manually selects an audio fragment, for instance, for the "enchanted forest" light scene in the Philips Hue Go, based on the title of the light scene, the user 155 may select the audio fragment of a bird singing, wind blowing or an animal sound which resembles with the title `enchanted forest'. In a more advanced embodiment, machine learning model may be used to analyze the determined characteristics and provides an audio fragment. The audio fragment rendering device 135 may be arranged for rendering the provided audio fragment. The provided audio fragment may be spatially and temporally rendered together with the light scene. These steps are also exemplary shown and discussed in Fig. 3.

When the light scene may be subsequently selected, for instance, the user 155 subsequently selects a Go-to-sleep (good night) scene at another night, the subsequent rendering of the audio fragment may be limited to a predetermined number of times. The number of times may be determined based on one or more of: a user 155 preference, an environmental context, number of audio fragment rendering devices 135, type of audio fragment rendering devices 135, a lighting infrastructure of a user 155 etc. For example, a lighting infrastructure of a user 155 comprises a large number of the lighting devices 111-114 such that the light scene is sufficiently recognizable or perceivable by the user 155, (s)he may not prefer to subsequently render the audio fragment, in this case the predetermined number of times is zero, or (s)he may prefer to subsequently render the audio fragment, e.g. for 2 times or 3 times. The determination of the number of times may be manually performed by a user 155 or based on a historic data, e.g. a machine learning model trained on the historic data to predict the number of times.

The predetermined number of times of the subsequent rendering of the audio fragment may be different for a descriptively selected light scene and for a non-descriptively light scene. For instance, if a user interface device 160 provides a descriptive name and a user 155 is aware of the name of the light scene, the subsequent rendering is limited to a smaller number compared to if the user 155 has selected the light scene via a legacy wall switch 121. For non-descriptively selected light scenes, the predetermined number of times may be different for each or some of the methods (ways) of non-descriptive selection. For example, if a user 155 has selected the light scene via a voice command 122, (s)he is aware of the name of the light scene, the subsequent rendering is limited to a smaller number compared to if the user 155 has selected the light scene via a legacy wall switch 121. The predetermined number of times may be same for a descriptively selected light scene and for a non-descriptively selected light scene. For example, a selection via a voice command 122 and a selection via a mobile phone 160 with a descriptive name of the light scene may have the same predetermined number of times.

The subsequent rendering of the audio fragment may comprise rendering an amended audio fragment or rendering a different audio fragment, wherein the amended audio fragment may comprise changing one or more of: time duration, beat, timbre, pitch, intensity, rhythm, major and minor key. For example, a user 155 may not prefer the provided audio fragment and may prefer to amend the subsequent rendering of the audio fragment. For example, with the `enchanted forest' light scene, if a bird sound is provided as an audio fragment, the user 155 may prefer to amend the intensity and/or time duration of the audio fragment. The amended audio fragment may be based on one or more of: an environmental context, number of audio fragment rendering devices 135, type of audio fragment rendering devices 135, a lighting infrastructure of a user 155 etc. For example, if the system 100 comprises only one audio fragment rendering device 135 in an environment of the user 155, the intensity of the audio fragment may be preferably increased or other way around. Alternatively, a different audio fragment may be used for the subsequent rendering of the audio fragment. Such different audio fragment may be applied to circumvent saturation in the senses of the user 155. In an example, when the attention of a user 155, when the light scene is rendered, is disrupted by e.g. a disturbing event (resulting in losing his/her focus on the light scene), then the audio fragment may be subsequently rendered.

Additionally or alternatively, a second modality may be provided and a functional device (not shown) may be controlled to render the provided second modality. The second modality may comprise affecting one or more of human sensing system(s): visual, olfactory, kinesthetic. The visual sensing system may comprise a picture and/or a video, for example, a video is rendered on a video rendering device (not shown) such as a television display or a mobile display. The olfactory sensing system may comprise evoking olfactory imagery, e.g. smell, aroma etc., rendered by a olfactory rendering device, e.g. a connected smell dispenser. The kinesthetic sensing system may comprise the sense of touch, e.g. feel, warm, vibration etc.

A selection of the second modality from a group of second modalities may be based on one or more of: a user 155 preference, an activity of a user 155, a spatial location of the functional device, a psychological or physiological state of a user 155, the time of day, an environmental context. The second modality may be rendered sequentially with the audio fragment or in parallel to the audio fragment. In some cases, only the second modality may be rendered instead of the audio fragment. In presence of the group of second modalities, an appropriate modality or a combination of modalities may be selected. For example, in presence of many users chatting or music playing, the olfactory (smell) may be preferred over the audio fragment, while in the context of a dinner, the audio fragment may be preferred over the olfactory (smell). The group of second modalities may be regularly repeated, in a sequence, as to make effective, maintain, renew or even strengthen the effect. It is known and described in the prior art that when using multiple sequential cues (modalities), the likelihood of being able to effectively create the envisioned association, e.g. with the light scene, is increased.

Fig. 2 shows schematically and exemplary a user interface device 160 for selecting a light scene. The user interface device 160, in this example, is a mobile phone. The user interface device 160 may comprise a selection 261 of an environment, e.g. living room, bedroom, kitchen etc. The user interface device 160 provides a descriptive name(s) 262-267 of the light scene(s). These descriptive names 262-267 may comprise one or more of: texts, picture and/or images. A first signal may be generated, when a light scene is selected via the user interface device 160, which is indicative of a descriptive selection of the light scene.

Fig. 3 shows schematically and exemplary a flowchart illustrating an embodiment of a method 300 for enhancing a user's recognition of a light scene. The method 300 comprises receiving 310 a first signal indicative of a selection of the light scene; the light scene defining one or more lighting instructions according to which one or more lighting devices 111-114 are to be controlled. The method 300 further comprises controlling 320 the one or more lighting devices 111-114 to render the light scene.

The method 300 further comprises determining 330 whether the light scene has either been descriptively selected or has been non-descriptively selected; wherein a determination is made that the light scene has been descriptively selected when the light scene has been selected via a user interface device 160 which provides a descriptive name of the light scene, and wherein otherwise the determination is made that the light scene has been non-descriptively selected. The determination 330 may be made to distinguish between a descriptively selected light scene or a non-descriptively selected light scene. The determination 330 may be based on a characteristic of the received first signal, e.g. which source the first signal is coming from, the format, type etc. The format of the first signal e.g. may also indicate the source of the first signal. The steps of controlling 320 and determining 330, and other steps, are exemplary shown to be performed sequentially but the steps may be performed in any order.

The method 300 further comprises, if the determination has been made that the light scene has been non-descriptively selected (a yes 334), determining 340 a characteristic of the light scene. The determined characteristics of the light scene may comprise one or more of: title, color, color temperature, intensity, beam width, beam direction, illumination intensity. The method 300 further comprises providing 350 an audio fragment based on the determined characteristic, and controlling 360 an audio fragment rendering device 135 to render the provided audio fragment. The audio fragment may be provided such that it matches with the light scene.

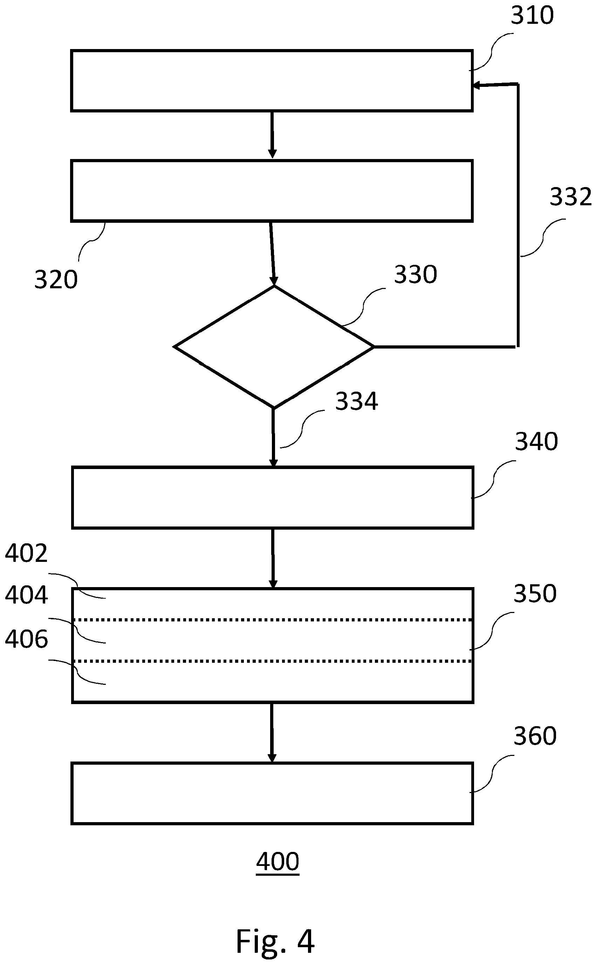

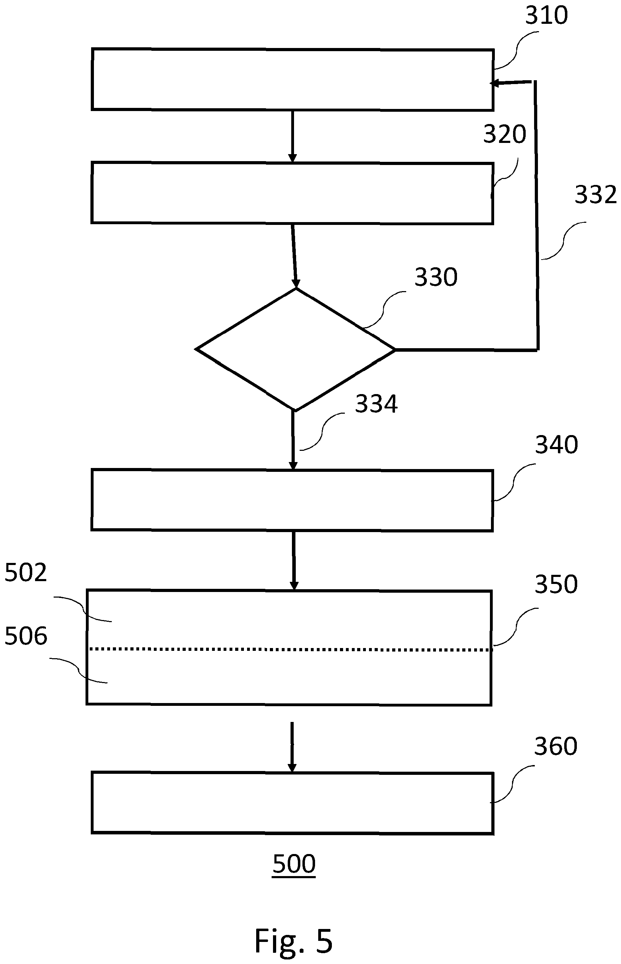

Fig. 4 and Fig. 5 show schematically and exemplary a flowchart illustrating an embodiment of methods 400, 500 for enhancing a user's recognition of a light scene. The methods 400, 500 discuss various embodiments of the step of providing 350 in detail. Fig. 4 shows schematically and exemplary that the step of providing 350 may comprise obtaining 402 a plurality of audio fragments. The plurality of the audio fragments may be obtained from one or more of: an external server (e.g. cloud), a user 155 via a user interface device 160, a music streaming or video sharing platform. Any other ways to obtain the plurality of audio fragments may also be possible.

The step of providing 350 may further comprise selecting 404 the audio fragment from the plurality of audio fragments based on the determined characteristic. There may be different methods to perform the selection 404. In a simple way, the audio fragment selection 404 may be performed manually. A user 155, for instance, after creating a light scene may be prompted to select an audio fragment from the plurality of audio fragments, wherein the plurality of audio fragments may be derived from an open-source data-base or from a data-base of the user 155. The audio-fragment data base as presented to the user 155 may preferably be a selection of the plurality of audio fragments which relates (in general terms) to the light scene. The determined characteristic may be the light scene title. The light scene title may be used as a keyword for the selection 404 of the audio fragment, which best suited the light scene title. For example, the light scene with title 'Carnival', may be used to identify audio fragments representing the event. In an example, the step of providing 350 may comprise checking if there is an audio fragment associated with the scene and if not, e.g. when the light scene is rendered for the first time) an audio fragment is selected.

Machine learning approaches may be used to perform the selection 404. For example, machine learning approaches may be used to match the colors or an image that was used for color extraction with a possible nature light scene, event, or location. For example, image databases may be used to build a machine learning model that may assign labels to color combinations, for instance by:
- searching for images or directly using the image associated with the light scene, containing colors from the light scene and any text labels that may be available (scene name);
- analyze keywords associated with the found images,
- use these keywords to identify an appropriate audio fragment or a plurality of audio fragments,

For example, with image selection based on the three colors and nature label. A majority of the images display flowers in the field (based on labels and keywords for the selected images) may be recognized and then use this to search for audio fragment(s) associated with these keywords leading to, for example audio fragments of bee's sound, countryside, summer etc. Bright scenes can hint to a sunny day (in summer or winter), while the combination of a bright scene with green hues might point to typical summer scenes.

The time duration of the audio fragment may be less than a threshold. For example, the audio fragment is less than 2 sec, 5 sec or 10 sec, wherein the time duration may also be selected based on the determined characteristic of the light scene. The time duration of the audio fragment may be based on lighting infrastructure of a user 155 and/or an environmental context. The time duration of the audio fragment may be selected such that the user 155 recognition of the light scene is enhanced. The intensity of the audio fragment may be less than a threshold and may be, e.g. based on the activity of a user 155, a lighting infrastructure, a spatial location of the audio fragment rendering device 135, time of the day, a psychological or physiological state of a user 155.

The step of providing 350 may further comprise associating 406 the audio fragment with the light scene. The associated audio fragment may be spatially and temporally rendered together with the light scene.

When a subset of audio fragments have been selected 404, the step of selecting the audio fragment from the subset may be based on one or more of: a user 155 preference, a spatial location, type and/or number of the audio fragment rendering devices 135, a psychological or physiological state of a user 155, a previous audio fragment used by a user 155, the time of day, an environmental context. For example, for enchanted forest light scene, when a subset of the plurality of audio fragments has been selected, e.g. bird sound, wind blowing etc., the to-be-rendered audio fragment may be selected 404 based on the user 155 preference or on the spatial location of the audio fragment rendering device 135 such that the user's recognition of the light scene is enhanced.

Fig. 5 shows schematically and exemplary a flowchart illustrating an embodiment of another method for enhancing a user's recognition of a light scene; wherein the step of providing 350 may comprise generating 502 the audio fragment based on the determined characteristic. For example, audio fragment may be synthetically generated based on the determined characteristic of the light scene. The step of providing 350 may further comprise associating 506 the audio fragment with the light scene.

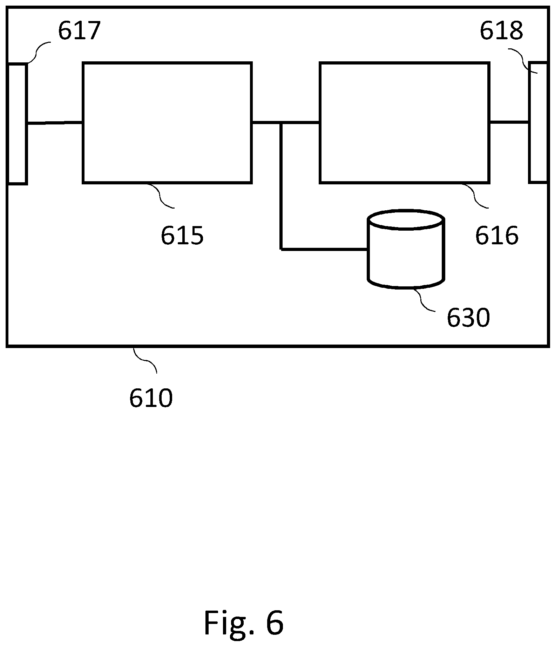

Fig. 6 shows schematically and exemplary a controller 610 arranged for executing the steps of the method(s) 300, 400, 500. The controller 610 may comprise a processor 615, a communication unit 616, an input and output interface 617-618 respectively and a memory 630. The input interface 617 may be arranged for receiving a first signal indicative of a selection of the light scene. The processor 615 may be arranged for executing the steps of the methods 300, 400, 500. The memory 630 may optionally be used to store the plurality of audio fragments and/or the associated audio fragment. The communication unit 616 may be arranged for communicating with the audio fragment rendering device 135 and/or with the functional device. The communication unit 616 may be comprised in the processor 615. The output interface 618 may be arranged for outputting e.g. the audio fragment and/or the second modality to the audio fragment rendering device and/or functional device.

It will be understood that the processor 615 or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc.

The controller 610 may be implemented in a unit, such as wall panel, desktop computer terminal, in the bridge, in the lighting device or even a portable terminal such as a laptop, tablet or smartphone. Further, the controller 610 may be implemented remotely (e.g. on a server); and the controller 610 may be implemented in a single unit or in the form of distributed functionality distributed amongst multiple separate units (e.g. a distributed server comprising multiple server units at one or more geographical sites, or a distributed control function distributed amongst the light sources 111-114 or audio fragment rendering device 135. Furthermore, the controller 610 may be implemented in the form of software stored on a memory (comprising one or more memory devices) and arranged for execution on a processor (comprising one or more processing units), or the controller 610 may be implemented in the form of dedicated hardware circuitry, or configurable or reconfigurable circuitry such as a PGA or FPGA, or any combination of these.

The methods 300, 400 and 500 may be executed by computer program code of a computer program product when the computer program product is run on a processing unit of a computing device, such as the processor 615 of the controller 610.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method (300) for controlling an audio fragment rendering device to render an audio fragment for enhancing a user's recognition of a non-descriptively selected light scene, the method comprising:
- receiving (310) a first signal indicative of a selection of the light scene; the light scene defining one or more lighting instructions according to which one or more lighting devices are to be controlled;
- determining (330) whether the light scene has either been descriptively selected or has been non-descriptively selected; wherein a determination is made that the light scene has been descriptively selected when the light scene has been selected via a user interface device (160) which provides a descriptive name of the light scene, and wherein otherwise the determination is made that the light scene has been non-descriptively selected;
- controlling (320) the one or more lighting devices to render the light scene; and
- on condition that the determination has been made that the light scene has been non-descriptively selected:
- determining (340) a characteristic of the light scene;
- providing (350) an audio fragment based on the determined characteristic;
- controlling (360) an audio fragment rendering device (135) to render the provided audio fragment.

2. The method according to claim 1, wherein the determined characteristics of the light scene comprises one or more of: an image associated with the light scene, title, color, color temperature, intensity, beam width, beam direction, illumination intensity.

3. The method according to claim 1, wherein the non-descriptively selected light scene comprises the selection of the light scene via one of: a voice command, a switch, a non-descriptive icon on a user interface device, a rule-based selection, a time-based selection, a sensor-based selection.

4. The method according to any of the proceeding claims, wherein the method further comprises:
- receiving a second signal indicative of a subsequent selection of the light scene; wherein a subsequent rendering of the audio fragment is limited to a predetermined number of times.

5. The method according to claim 4, wherein the predetermined number of times of the subsequent rendering of the audio fragment is different for a descriptively selected light scene and for a non-descriptively light scene.

6. The method according to claim 4, wherein the subsequent rendering of the audio fragment comprises rendering an amended audio fragment or rendering a different audio fragment.

7. The method according to claim 6, wherein the amended audio fragment comprises changing one or more of: time duration, beat, timbre, pitch, intensity, rhythm, major and minor key.

8. The method according to any of the proceeding claims, wherein the step of providing an audio fragment based on the determined characteristic comprises:
- obtaining a plurality of audio fragments,
- selecting the audio fragment from the plurality of audio fragments based on the determined characteristic,
- associating the audio fragment with the light scene.

9. The method according to claim 8, wherein when a subset of audio fragments have been selected, the step of selecting the audio fragment from the subset is based on one or more of: a user preference, a spatial location, type and/or number of the audio fragment rendering devices, a psychological or physiological state of a user, a previous audio fragment used by a user, the time of day, an environmental context.

10. The method according to claim 1, wherein the step of providing an audio fragment based on the determined characteristic comprises:
- generating the audio fragment based on the determined characteristic,
- associating the audio fragment with the light scene.

11. The method according to any of the proceeding claim, wherein the method further comprises:
- providing a picture and/or a video based on the determined characteristic;
- controlling a video rendering device to render the provided picture and/or video.

12. The method according to any of the claims 1-10, wherein the method further comprises:
- providing an aroma based on the determined characteristic;
- controlling an olfactory rendering device to render the provided aroma.

13. The method according to claim 11 or claim 12, wherein the time period in which the picture and/or video or, respectively, aroma is rendered at least partially overlaps with the time period in which the audio fragment is rendered.

14. A controller for controlling an audio fragment rendering device to render an audio fragment for enhancing a user's recognition of a light scene; the controller comprising:
an input interface arranged for receiving a first signal indicative of a selection of the light scene;
a processor arranged for executing the steps of the method of any of claims 1-13; and
an output interface arranged for outputting an audio fragment to an audio fragment rendering device.

15. A computer program product comprising instructions configured to execute the steps of the method of any of claims 1-13 when executed on a controller according to claim 14.

## Patentansprüche

1. Verfahren (300) zum Steuern einer Audiofragmentwiedergabevorrichtung, um ein Audiofragment zum Verbessern einer Erkennung für einen Benutzer einer nicht deskriptiven ausgewählten Lichtszene wiederzugeben, das Verfahren umfassend:
- Empfangen (310) eines ersten Signals, das eine Auswahl der Lichtszene angibt, wobei die Lichtszene eine oder mehrere Beleuchtungsanweisungen definiert, gemäß denen eine oder mehrere Beleuchtungsvorrichtungen gesteuert werden sollen;
- Bestimmen (330), ob die Lichtszene entweder deskriptiv ausgewählt wurde oder nicht deskriptiv ausgewählt wurde; wobei eine Bestimmung vorgenommen wird, dass die Lichtszene deskriptiv ausgewählt wurde, wenn die Lichtszene über eine Benutzerschnittstellenvorrichtung (160) ausgewählt wurde, die einen deskriptiven Namen der Lichtszene bereitstellt, und wobei andernfalls die Bestimmung vorgenommen wird, dass die Lichtszene nicht deskriptiv ausgewählt wurde;
- Steuern (320) der einen oder der mehreren Beleuchtungsvorrichtungen, um die Lichtszene wiederzugeben; und
- unter der Bedingung, dass die Bestimmung vorgenommen wurde, dass die Lichtszene nicht deskriptiv ausgewählt wurde:
- Bestimmen (340) einer Eigenschaft der Lichtszene;
- Bereitstellen (350) eines Audiofragments basierend auf der bestimmten Eigenschaft;
- Steuern (360) einer Audiofragmentwiedergabevorrichtung (135), um das bereitgestellte Audiofragment wiederzugeben.

2. Verfahren nach Anspruch 1, wobei die bestimmten Eigenschaften der Lichtszene eines oder mehrere umfassen von: einem Bild, das der Lichtszene zugeordnet ist, einem Titel, einer Farbe, einer Farbtemperatur, einer Intensität, einer Strahlbreite, einer Strahlrichtung, einer Beleuchtungsintensität.

3. Verfahren nach Anspruch 1, wobei die nicht deskriptive ausgewählte Lichtszene die Auswahl der Lichtszene über eines von Folgendem umfasst: einen Sprachbefehl, einen Schalter, ein nicht deskriptives Symbol auf einer Benutzerschnittstellenvorrichtung, eine regelbasierte Auswahl, eine zeitbasierte Auswahl, eine sensorbasierte Auswahl.

4. Verfahren nach einem der vorstehenden Ansprüche, wobei das Verfahren ferner umfasst:
- Empfangen eines zweiten Signals, das eine nachfolgende Auswahl der Lichtszene angibt, wobei ein nachfolgendes Wiedergeben des Audiofragments auf eine vorbestimmte Anzahl von Malen beschränkt ist.

5. Verfahren nach Anspruch 4, wobei die vorbestimmte Anzahl von Malen des nachfolgenden Wiedergebens des Audiofragments für eine deskriptiv ausgewählte Lichtszene und für eine nicht deskriptiv Lichtszene unterschiedlich ist.

6. Verfahren nach Anspruch 4, wobei das nachfolgende Wiedergeben des Audiofragments das Wiedergeben eines geänderten Audiofragments oder das Wiedergeben eines unterschiedlichen Audiofragments umfasst.

7. Verfahren nach Anspruch 6, wobei das geänderte Audiofragment das Ändern eines oder mehrerer von Folgendem umfasst: Zeitdauer, Takt, Klangfarbe, Tonhöhe, Intensität, Rhythmus, Dur- und Molltonart.

8. Verfahren nach einem der vorstehenden Ansprüche, wobei der Schritt des Bereitstellens eines Audiofragments basierend auf der bestimmten Eigenschaft umfasst:
- Erhalten einer Vielzahl von Audiofragmenten,
- Auswählen des Audiofragments aus der Vielzahl von Audiofragmenten basierend auf der bestimmten Eigenschaft,
- Zuordnen des Audiofragments zu der Lichtszene.

9. Verfahren nach Anspruch 8, wobei, wenn eine Teilmenge von Audiofragmenten ausgewählt wurde, der Schritt des Auswählens des Audiofragments aus der Teilmenge auf einem oder mehreren von Folgendem basiert: einer Benutzerpräferenz, einer räumlichen Position, Art und/oder Anzahl der Audiofragmentwiedergabevorrichtungen, einem psychologischen oder physiologischen Zustand eines Benutzers, einem vorherigen Audiofragment, das durch einen Benutzer verwendet wird, der Tageszeit, einem Umgebungskontext.

10. Verfahren nach Anspruch 1, wobei der Schritt des Bereitstellens eines Audiofragments basierend auf der bestimmten Eigenschaft umfasst:
- Erzeugen des Audiofragments basierend auf der bestimmten Eigenschaft,
- Zuordnen des Audiofragments zu der Lichtszene.

11. Verfahren nach einem der vorstehenden Ansprüche, wobei das Verfahren ferner umfasst:
- Bereitstellen eines Bildes und/oder eines Videos basierend auf der bestimmten Eigenschaft;
- Steuern einer Videowiedergabevorrichtung, um das bereitgestellte Bild und/oder Video wiederzugeben.

12. Verfahren nach einem der vorstehenden Ansprüche 1 bis 10, wobei das Verfahren ferner umfasst:
- Bereitstellen eines Aromas basierend auf der bestimmten Eigenschaft;
- Steuern einer Geruchswiedergabevorrichtung, um das bereitgestellte Aroma wiederzugeben.

13. Verfahren nach Anspruch 11 oder 12, wobei der Zeitraum, in dem das Bild und/oder das Video beziehungsweise das Aroma wiedergegeben wird, mindestens teilweise mit dem Zeitraum überlappt wird, in dem das Audiofragment wiedergegeben wird.

14. Steuerung zum Steuern einer Audiofragmentwiedergabevorrichtung, um ein Audiofragment zum Verbessern einer Erkennung für einen Benutzer einer Lichtszene wiederzugeben, die Steuerung umfassend:
eine Eingabeschnittstelle, die zum Empfangen eines ersten Signals angeordnet ist, das eine Auswahl der Lichtszene angibt;
einen Prozessor, der zum Ausführen der Schritte des Verfahrens nach einem der Ansprüche 1 bis 13 angeordnet ist; und
eine Ausgabeschnittstelle, die zum Ausgeben eines Audiofragments an eine Audiofragmentwiedergabevorrichtung angeordnet ist.

15. Computerprogrammprodukt, umfassend Anweisungen, die konfiguriert sind, um die Schritte des Verfahrens nach einem der Ansprüche 1 bis 13, wenn diese auf einer Steuerung nach Anspruch 14 ausgeführt werden, auszuführen.

## Revendications

1. Procédé (300) permettant de commander un dispositif de restitution de fragment audio pour restituer un fragment audio pour améliorer la reconnaissance par un utilisateur d'une scène de lumière choisie de manière non descriptive, le procédé comprenant :
- la réception (310) d'un premier signal indiquant une sélection de la scène de lumière ; la scène de lumière définissant une ou plusieurs instructions d'éclairage selon lesquelles un ou plusieurs dispositifs d'éclairage doivent être commandés ;
- le fait de déterminer (330) si la scène de lumière soit a été sélectionnée de manière descriptive soit a été sélectionnée de manière non descriptive ; dans lequel une détermination est faite que la scène de lumière a été sélectionnée de manière descriptive lorsque la scène de lumière a été sélectionnée par l'intermédiaire d'un dispositif d'interface utilisateur (160) qui fournit un nom descriptif de la scène de lumière, et dans lequel dans un cas contraire la détermination est faite que la scène de lumière a été sélectionnée de manière non descriptive ;
- la commande (320) du ou des dispositifs d'éclairage pour restituer la scène de lumière ;
et
- à condition que la détermination ait été faite que la scène de lumière a été sélectionnée de manière non descriptive :
- la détermination (340) d'une caractéristique de la scène de lumière ;
- la fourniture (350) d'un fragment audio en fonction de la caractéristique déterminée ;
- la commande (360) d'un dispositif de restitution de fragment audio (135) pour restituer le fragment audio fourni.

2. Procédé selon la revendication 1, dans lequel les caractéristiques déterminées de la scène de lumière comprennent un ou plusieurs parmi : une image associée à la scène de lumière, un titre, une couleur, une température de couleur, une intensité, une largeur de faisceau, une direction de faisceau, une intensité d'illumination.

3. Procédé selon la revendication 1, dans lequel la scène de lumière sélectionnée de manière non descriptive comprend la sélection de la scène de lumière par l'intermédiaire de l'un parmi : une commande vocale, un interrupteur, une icône non descriptive sur un dispositif d'interface utilisateur, une sélection en fonction d'une règle, une sélection en fonction du temps, une sélection en fonction d'un capteur.

4. Procédé selon l'une quelconque des revendications précédentes, dans lequel le procédé comprend en outre :
- la réception d'un second signal indiquant une sélection ultérieure de la scène de lumière ; dans lequel une restitution ultérieure du fragment audio est limitée à un nombre de fois prédéterminé.

5. Procédé selon la revendication 4, dans lequel le nombre de fois prédéterminé de la restitution ultérieure du fragment audio est différent pour une scène de lumière sélectionnée de manière descriptive et pour une scène de lumière de manière non descriptive.

6. Procédé selon la revendication 4, dans lequel la restitution ultérieure du fragment audio comprend la restitution d'un fragment audio modifié ou la restitution d'un fragment audio différent.

7. Procédé selon la revendication 6, dans lequel le fragment audio modifié comprend le changement d'un ou plusieurs parmi : durée, cadence, timbre, hauteur, intensité, rythme, tonalité majeure et mineure.

8. Procédé selon l'une quelconque des revendications précédentes, dans lequel l'étape de fourniture d'un fragment audio en fonction de la caractéristique déterminée comprend :
- l'obtention d'une pluralité de fragments audio,
- la sélection du fragment audio parmi la pluralité de fragments audio en fonction de la caractéristique déterminée,
- l'association du fragment audio à la scène de lumière.

9. Procédé selon la revendication 8, dans lequel lorsqu'un sous-ensemble de fragments audio ont été sélectionnés, l'étape de sélection du fragment audio parmi le sous-ensemble est en fonction d'un ou plusieurs parmi : une préférence d'utilisateur, une localisation spatiale, un type et/ou un nombre de dispositifs de restitution de fragments audio, un état psychologique ou physiologique d'un utilisateur, un fragment audio précédent utilisé par un utilisateur, l'heure de la journée, un contexte environnemental.

10. Procédé selon la revendication 1, dans lequel l'étape de fourniture d'un fragment audio en fonction de la caractéristique déterminée comprend :
- la génération du fragment audio en fonction de la caractéristique déterminée,
- l'association du fragment audio à la scène de lumière.

11. Procédé selon l'une quelconque des revendications précédentes, dans lequel le procédé comprend en outre :
- la fourniture d'une image et/ou d'une vidéo en fonction de la caractéristique déterminée ;
- la commande d'un dispositif de restitution de vidéo pour restituer l'image et/ou la vidéo fournies.

12. Procédé selon l'une quelconque des revendications 1 à 10, dans lequel le procédé comprend en outre :
- la fourniture d'un arôme en fonction de la caractéristique déterminée ;
- la commande d'un dispositif de restitution olfactive pour restituer l'arôme fourni.

13. Procédé selon la revendication 11 ou la revendication 12, dans lequel le laps de temps pendant lequel l'image et/ou la vidéo ou, respectivement, l'arôme sont restitués chevauche au moins partiellement le laps de temps pendant lequel le fragment audio est restitué.

14. Organe de commande permettant de commander un dispositif de restitution de fragment audio pour restituer un fragment audio pour améliorer la reconnaissance par un utilisateur d'une scène de lumière ; l'organe de commande comprenant :
une interface d'entrée agencée pour la réception d'un premier signal indiquant une sélection de la scène de lumière ;
un processeur agencé pour exécuter les étapes du procédé selon l'une quelconque des revendications 1 à 13 ; et
une interface de sortie agencée pour délivrer en sortie un fragment audio à un dispositif de restitution de fragment audio.

15. Produit programme informatique comprenant des instructions configurées pour exécuter les étapes du procédé selon l'une quelconque des revendications 1 à 13 lorsqu'elles sont exécutées sur un organe de commande selon la revendication 14.
